# EUROPEAN PATENT SPECIFICATION

(11) **EP 2 391 524 B1**
(45) Date of publication and mention of the grant of the patent: **11.01.2017**
(21) Application number: 10707150.8
(22) Date of filing: 27.01.2010
(51) Int. Cl.: B60N 2/28

(54) **CHILD SAFETY SEAT WITH HEIGHT ADJUST ABLE HARNESS AND HEADREST**
KINDERSICHERHEITSSITZ MIT VERSTELLBAREM GURTSYSTEM UND KOPFSTÜTZE
SIÈGE DE SÉCURITÉ POUR ENFANT AVEC HARNAIS RÉGLABLE ET APPUIE-TÊTE

(30) Priority: 27.01.2009 US 147656 P
(43) Date of publication of application: 07.12.2011
(73) Proprietor: Graco Children's Products Inc., Atlanta, GA 30328 (US)
(72) Inventor: MCKEE, Brandon, Reading, PA 19605 (US); DINGLER, Noah, Phoenixville, PA 19460 (US); BILLMAN, Craig, Phoenixville, PA 19460 (US)
(74) Representative: Metten, Karl-Heinz
(86) International application number: PCT/US2010/022192
(87) International publication number: WO 2010/088248

(56) References cited:
- WO-A2-2006/044559
- JP-U- 6 042 464
- US-A- 6 030 047

## Description

### Related Application Data

### Background

### 1. Field of the Disclosure

The present invention is generally directed to child safety seats, and more particularly to a child safety seat with a harness system and a headrest that are height adjustable.

### 2. Description of Related Art

Child safety seats, or car seats, are well known for placement on a vehicle seat in order to safely position, secure, and restrain a child in the vehicle. Child safety seats are also well known to employ an on-board or dedicated harness system. A typical five-point harness system often employs a crotch strap, a pair of lap belts, and a pair of shoulder straps. The various straps and belts are connected to one another at a latch or buckle typically carried on the crotch strap. The length of the various straps and belts is adjustable in order to accommodate children of different size and to accommodate a growing child.

It is well known that parents do not always know how to correctly secure their children in a safety seat with the child restraint system of the seat. Many car seats have a height adjustable headrest and a length adjustable harness system. However, it is typically up to the parent to determine the proper headrest height and the appropriate harness height (usually determined by shoulder position) based on the size of their child.

A typical headrest is vertically adjustable on the seat by using an actuator to release the headrest and sliding the headrest up or down to one of a plurality of selectable headrest heights. The headrest is typically positioned so that a child's head rests against the pad between the side wings of the headrest. One problem with a conventional headrest is that a parent may not readjust the headrest height when needed, either when a different child sits in the seat or as the same child grows. Another problem is that a parent also may simply position the headrest incorrectly, even if they attempt to adjust the headrest position.

One problem with a typical harness system is that the shoulder strap height, or harness height, can be difficult to properly adjust or reposition on the seat in order to accommodate children of different height. As a child grows, the shoulder strap height should be raised in order to safely and comfortably restrain the child. A number of seat manufacturers have attempted to address this problem. Unfortunately, the harness systems on such child safety seats are often still difficult to adjust and operate. This can discourage a user of the seat from making the necessary adjustments when appropriate.

Many child safety seats employ slots in the seat back through which the shoulder harness straps are routed. Height adjustment is accomplished by selecting the appropriate pair of slots and threading the harness webbing through the selected slots. However, a user must uninstall and then reinstall the harness when adjusting the harness height. This can be difficult for the user because the seat has to be removed from the vehicle and then turned over in order to access the harness straps for adjustment. The harness straps must then be withdrawn from the current pair of slots and only then can the webbing be rerouted or threaded through a different pair of selected slots. The seat must then be reinstalled in the vehicle, which can require re-anchoring the seat to the vehicle seat anchors. Making this task even more difficult is that the slots in the seat back are often covered by soft goods or other seat components and difficult to access. The slots also are often quite small in size. The user must locate and identify the correct slots and then manipulate the webbing of the straps through the correct slots.

A number of car seats with an alternate type of harness height adjustment solution are available in the market place. Manufacturers such a Cosco, Evenflo, Britax, and Indiana Mills & Manufacturing, Inc. (IMMI) have attempted to address the above-noted problems by modifying the slot-based approach to harness height adjustment. These mechanisms are intended to be simpler or more reliable to use than the most commonly known slot based method of re-threading the seat harness through various selectable slots in the seat. Such seats have harness straps that are fed through slots in a movable control panel or other structure of the seat before reaching the seating area. The harness straps remain engaged with the slots of the harness control panel or other structure during and after the harness height adjustment. The control panel or other structure moves along the seat back surface in order to reposition the harness straps. The control panel is typically coupled to and forms a part of the seat back and seating surface and can be difficult to access because it is hidden beneath the seat soft goods, is covered by structures of the seat back, and the like. Use of the control panel approach also renders height adjustment, manufacturing, assembling, and cleaning of the seat, as well as other operations involving the harness straps more difficult and complex. The control panel approach increases the complexity of the car seat, which increases the cost and complexity of manufacturing and assembling the seats.

Known child safety seats with height adjustable harness systems also typically require that the harness latch and/or the harness tensioning mechanisms be actuated or disengaged before adjusting the height of the harness. These known solutions also complicate the design and implementation of soft goods onto the child safety seat. This can make it more difficult for a consumer to remove the soft goods for cleaning and can make it more difficult to reinstall the soft goods on the seat.

Britax, Maxi-Cosi, and Bebe Comfort also have produced headrests that are coupled to the harness height adjustment mechanisms. IMMI has produced a headrest assembly with apertures to allow a user to manually control the headrest and harness height. Evenflo has produced a seat with a carriage that allows the user to adjust the harness height from the front of the seat through an opening that is behind a removable cover on the seat. Another individual has invented a similar method for controlling the harness height. Hans Torgersen & Son AS (HTS) has an adjustable harness carriage that can be adjusted manually from the back of the seat.

Examples of existing products that employ height adjustable harness systems of this type include the Maxi Cosi "Tobi" car seat, the Bebe Comfort "Axiss" car seat, the Britax "Renaissance", "Trio", and "Duo IsoFix" car seats, and the HTS "Mama's and Papa's Pro- Tec" car seat.

US patent US 6,030,047 describes a child-restraint seat for a vehicle comprising a seat shell including a bottom seat portion, a back support portion and a child-restraint harness wherein a harness-control panel positioned to lie adjacent to a front surface of the back support portion to cause a child seated in the seat shell to rest against the harness-control panel and formed to receive a shoulder belt portion of the child-restraint harness is mounted on the seat shell for up and down movement relative to the seat shell to raise and lower the shoulder belt portion of the child-restraint harness with respect to the bottom seat portion to harness small-sized children and large-sized children in a restrained position in the seat shell. International patent application WO 2006/044559 describe a child vehicle seat includes a seat assembly including an upright portion having a first passage and a second passage defined therein. The child vehicle seat further includes a harness system including (i) a first shoulder belt portion extending through the first belt passage, and (ii) a second shoulder belt portion extending through the second belt passage. Also, the child vehicle seat includes a retractor assembly configured to receive belt portions of the harness system in a wound configuration, the retractor assembly including a spring which urges belt portions of the harness system into the retractor assembly. Moreover, the child vehicle seat includes an actuator positionable between (i) a first portion in which the actuator prevents payout of belt portions from the retractor assembly, and (ii) a second position in which the actuator allows payout of belt portions from the retractor assembly. The retractor assembly further includes a manual adjustment mechanism, and manual movement of the manual adjustment mechanism causes further belt portions of the harness system to be advanced into the retractor assembly.

### Summary

An aspect of the invention is set out in accordance with claim 1 of the appended claims. Various embodiment of the invention are set out in accordance with the appended dependent claims.

A child safety seat in one example can have the transverse bar located behind the back side of the seat back near the bottom of the headrest assembly.

The transverse bar can direct the pair of shoulder straps from the back side toward the front facing side of the seat back.

A child safety seat in one example can have the transverse bar captured within an elongate slot permitting the bar to move toward and away from the back side of the seat back. The bar can direct the pair of shoulder straps from the back side to the front facing side of the seat back.

A child safety seat in one example can have the transverse bar seat in one of a vertical array of bar seats when tension in the seat harness overcomes a force of the spring.

A child safety seat in one example can have an array of bar seats that extend vertically and that can be carried on the back side of the seat back. The transverse bar can be carried by and movable vertically with the headrest assembly and can be captured within an elongate slot permitting the bar to move horizontally into and out of engagement with the array of bar seats. The bar can move horizontally by tension in the pair of shoulder straps.

A child safety seat in one example can have a vertical slot in the seat back. The headrest assembly can be slidable along the vertical slot between the raised and lowered positions.

A child safety seat in one example can have the transverse bar connected to a carriage on the headrest assembly and that can be movable vertically therewith. The transverse bar can be movable by tension applied by the pair of shoulder straps into engagement with any one of a plurality of vertically arranged notches on the back side of the seat back.

A child safety seat in one example can have the transverse bar biased out of engagement with a plurality of vertically arranged notches by a spring on a carriage.

For a child safety seat in one example the transverse bar can be normally biased to a disengaged condition permitting movement of the headrest assembly. The transverse bar can be movable to an engaged condition after the strap portions encounter shoulders of a seat occupant to thereby inhibit further downward movement of the headrest assembly.

A child safety seat in one example can have the transverse bar with a pair of distal ends. A clock spring can be coupled to each of the distal ends and to the back side of the seat back.

A child safety seat in one example can have a plurality of bar seats arranged vertically along a portion of the child safety seat. Tension can be applied to the back portions of the shoulder straps to pull the transverse bar and headrest assembly down from the raised position.

A child safety seat in one example can be configured such that the orientation of strap portions of shoulder straps can change to pull the transverse bar forward into engagement with one of a plurality of bar seats when the strap portions contact shoulders of an occupant seated in the child safety seat.

A child safety seat in one example can have a pair of strap slots vertically oriented and formed through the seat back. Each of the shoulder straps can extend through a respective one of the pair of strap slots.

A child safety seat in one example can have a tensioning strap that can protrude from a front of a seat bottom. The tensioning strap can be coupled to back portions of shoulder straps of a seat harness. A buckle housing can be coupled to the seat bottom. The strap portions can be connectable to the buckle housing. The tensioning strap can be pulled to increase tension in the shoulder straps when the strap portions are connected to the buckle housing.

A child safety seat in one example can have a tensioning strap that can be coupled to an automatic tensioner that can be actuated to increase tension when strap portions of shoulder straps of a harness system are connected to a buckle housing of the system.

A child safety seat in one example can be such that the headrest assembly can be adjustable to one or more intermediate positions between the raised and lowered positions.

For a child safety seat in one example by selectively increasing or decreasing tension in the pair of shoulder straps, the vertical position of the headrest assembly can be adjusted downward or upward, respectively, between the raised position and the lowered position. **Brief Description of the Drawings**

Objects, features, and advantages of the present invention will become apparent upon reading the following description in conjunction with the drawing figures, in which:
FIG. 1 shows one example of a child safety seat constructed in accordance with the teachings of the present invention and with the harness system and headrest assembly positioned at a maximum height.
FIG. 2 shows a perspective view of the child safety seat in FIG. 1 and with the harness system and headrest assembly positioned at a minimum height.
FIG. 3 shows a rear fragmentary perspective view, partly in phantom, of the upper seat back and headrest assembly portions of the child safety seat in FIG. 1 and illustrating one example of a latch and release mechanism for the headrest assembly and harness system.
FIG. 4 shows a rear view of the upper seat back and headrest assembly of the child safety seat in FIGS. 1 and 3.
FIG. 5 shows a cross-section along line V-V of the child safety seat shown in FIG. 4 and depicting a central portion of the latch and release mechanism.
FIG. 6 shows a cross-section along line VI-VI of the child safety seat shown in FIG. 4 with the headrest assembly and harness system in the maximum height position shown in FIG. 1.
FIG. 7 shows a cross-section of the child safety seat shown in FIG. 6 and with the headrest assembly and harness system being repositioned and adjusted.
FIG. 8 shows a cross-section of the child safety seat shown in FIG. 7, but with the headrest assembly and harness system positioned at a properly adjusted intermediate height position.

### Detailed Description of the Disclosure

The present disclosure is generally directed to a child safety seat or car seat that employs a height adjustable headrest assembly and harness system. The disclosed child safety seat solves or improves upon one or more of the above noted and/or other problems and disadvantages with prior known child safety seats of this type. The disclosed harness and headrest height adjustment systems and methods help to facilitate correct adjustment for the parent by ensuring that the headrest assembly and harness height are set at the proper position and that the harness system is properly tensioned each time a child is secured in the car seat. A new solution is needed because the aforementioned methods and systems known in the prior art require the parent to manually adjust the harness height and/or headrest assembly to a location that is suitable for their child, as well as to properly tension the harness system. The parent may not always know the proper height of the headrest assembly and shoulder harness straps so as to safely accommodate the size of their child. The disclosed systems and methods are intended to remove or reduce uncertainty and to help ensure that a child is properly secured in a car seat. The disclosed systems and methods utilize mechanisms that set the height of the headrest assembly and the harness shoulder straps at the proper location so that children of different sizes within the recommended height and weight range of the seat can be secured in the seat.

In one example, the disclosed child safety seat has an adjustable harness system, which when the harness system is tensioned repositions the shoulder strap height and alters the headrest assembly position on the seat back. The shoulder straps are routed or directed to a front facing side of the seat back at a height that can be altered or adjusted simply by tensioning the harness system. As the shoulder strap height is changed, the height of the headrest assembly is also changed. The disclosed child safety seat can simplify the construction and use of such seats as well as improve the design and handling of soft goods on the seat.

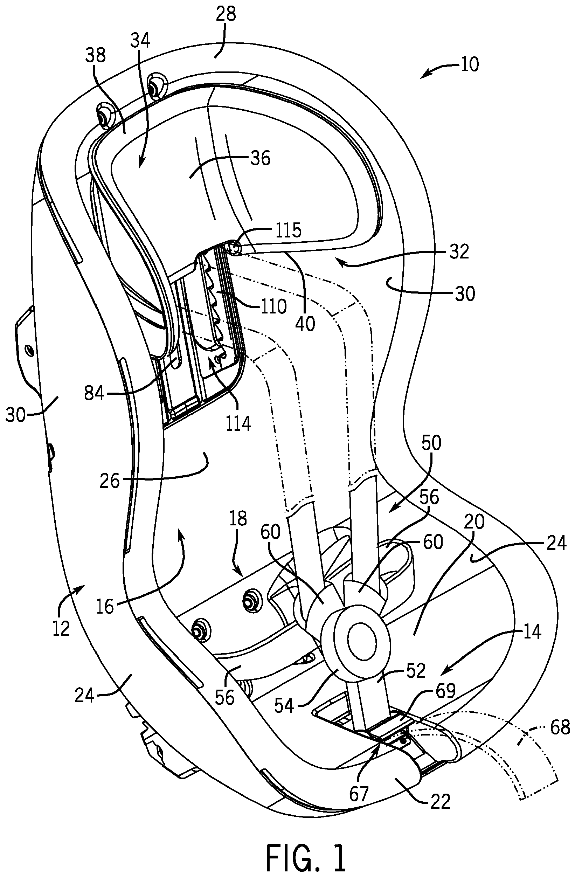

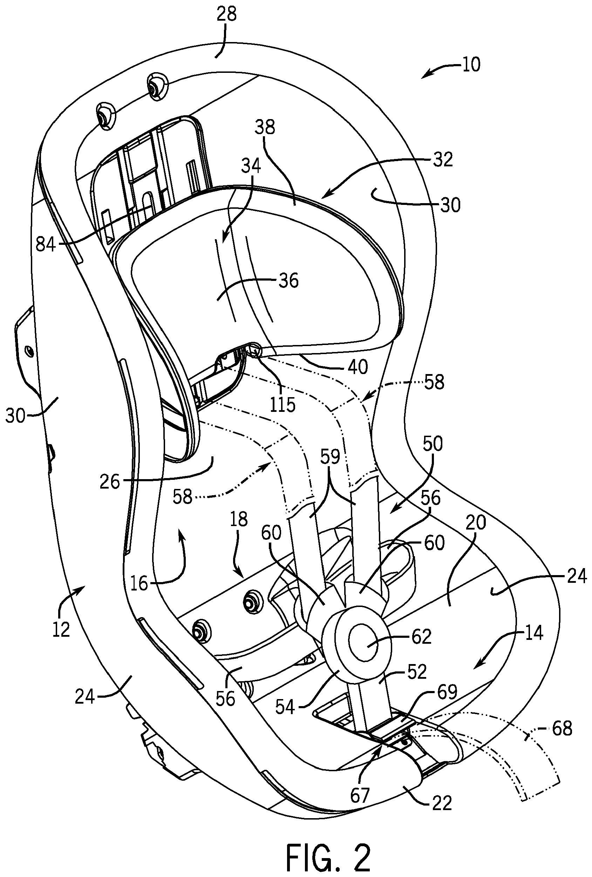

Referring now to the drawings, FIGS. 1 and 2 show front perspective views of one example of child safety seat 10 constructed in accordance with the teachings of the present invention. In this example, the child safety seat 10 has a seat shell 12 of a unitary construction. The seat shell 12 generally has a seat pan or seat bottom 14 joined to a seat back 16 at a seat bight region 18. The seat bottom 14 has a top or upward facing side 20, a front end 22, and a pair of upwardly extending side walls 24, which project upward from opposite sides of the seat bottom. The seat back 16 has a front facing side 26, an upper end 28, and a pair of side bolsters 30, which project forward from opposite sides of the seat back. The seat bottom 14 has a rear end and the seat back 16 has a lower end, which are joined integrally with one another at the seat bight 18 in this example.

As will become evident to those having ordinary skill in the art upon reading this disclosure, the particular configuration and construction of the various aspects of the child safety seat 10 and seat shell 12 can vary as long as it remains within the scope of the present invention as it is defined by the appended claims. The shape, size, and configuration of the child safety seat 10 and the seat shell 12 can deviate from the example shown and described herein. In the disclosed example, the seat shell 12 can be a plastic, molded, unitary structure. In another example, the seat shell components can be separately formed and attached or connected to one another to form the seat shell 12, can be made of other materials, and/or can be formed using other suitable processes.

In this example, the child safety seat 10 has a headrest assembly 32 connected near the upper end 28 of the seat back 16. The headrest assembly 32 in this example has a head support section 34 with a front facing surface 35 positioned between a pair of side wings 36. The side wings project forward from the side edges of the head support section 34. The headrest assembly 32 also has a top 38 and a bottom 40. The front facing surface 35 faces forward in the same direction as the front facing side 26 on the seat back 16.

As with the seat shell 12, the configuration and construction of the headrest assembly 32 can vary as long as it remains within the scope of the present invention as it is defined by the appended claims. The various aspects of the headrest assembly 32 can deviate from the example shown and described herein. The headrest assembly 32 can also be a molded, plastic, unitary structure or can be formed as subcomponents and assembled afterwards. The size, shape, and configuration of the various aspects of the headrest assembly 32 can also be altered as long as it remains within the scope of the present invention as it is defined by the appended claims.

The seat shell 12 is depicted herein without any soft goods in order to more easily illustrate the features and functionality of the present invention. In a typical example, a seat pad would be installed over the seat shell 12 and have a portion resting on the seat bottom 14 and the seat back 16. The seat pad would define a seating surface supported by the seat bottom 14 and seat back 16 on or against which an occupant would rest during use of the child safety seat 10. The seat pad can have multiple layers including combinations of a decorative fabric layer, a durable fabric layer, a comfortable fabric layer, padding, wadding, tufting, welting, and the like. Similarly, the headrest assembly 32 is shown herein without any soft goods, but can include same.

The child safety seat 10 in this example has an on-board or dedicated harness system 50 that is configured to secure an occupant in the seat during use. In the disclosed example, the harness system 50 has a crotch stalk 52 extending up from the seat bottom 14. A buckle housing 54 is connected to the free end of the crotch stalk 52. The harness system 50 also has a pair of continuous straps that, when installed, form a pair of lap belts 56 that also extends up from the seat bottom 14 near the side walls 24. The lap belts 56 continue into a pair of shoulder straps 58 with strap portions 59 that are positioned forward of the front facing side 26 of the seat back 16 and extend therealong. In this example, a buckle connector 60 is slidably received on each of the continuous straps. The position of the connector 60 defines the separation between each lap belt 56 and respective shoulder strap 58 when the harness system is installed. The connectors 60 latch to the buckle housing as shown and an actuator 62 on the housing can release the connectors.

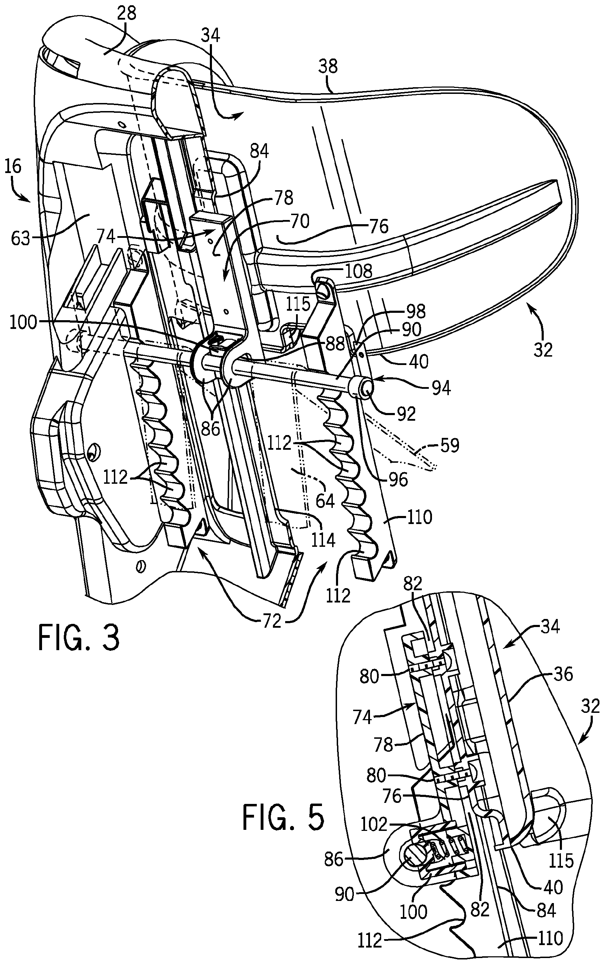

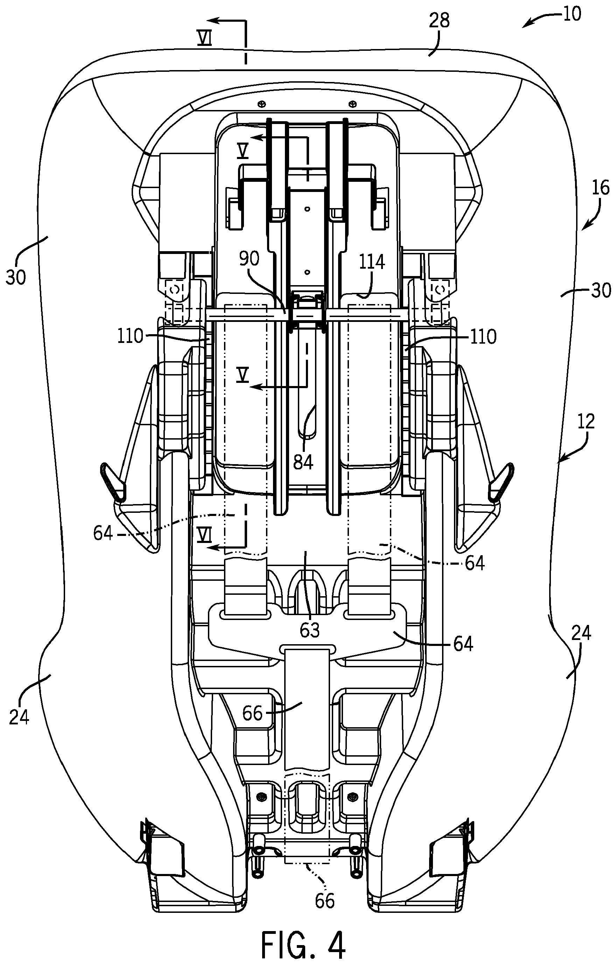

With reference to FIGS. 3 and 4, each of the strap portions 59 of the shoulder straps 58 extends through to a back side 63 of the seat back 16 in this example and continues to a back portion 64. The back portions 64 of the shoulder straps 58 extend down along the back side 63. The back portions 64 terminate at and are connected to a splitter plate 65. A single tensioning strap 66 is coupled to the bottom of the splitter plate 65 and extends down and under the seat bottom 14. As shown in FIGS. 1 and 2, the tensioning strap 66 passes through the seat bottom 14 to a central adjuster 67 located near the front end 22. A free end portion 68 of the tensioning strap 66 extends from the central adjuster 67 and can be pulled by a user to apply tension to the harness system as described in greater detail below. The central adjuster 67 can have a release actuator 69 or other release mechanism or means that can release the tensioning strap 66. When released, the tensioning strap 66 can be paid out if and when desired by pulling on the shoulder straps 58 and connectors 60 to add slack to the harness system. Alternatively, the central adjuster 67 and/or the crotch stalk 52 can be configured to automatically release the tensioning strap 66 upon disengagement of the buckle connectors 60 from the buckle housing 54.

The harness system 50 as disclosed herein is generally a conventional harness system in the form of a five-point harness system. Features of the harness system 50 that may deviate from a conventional system are discussed below in relation to the height adjustment aspects of the invention. Various features of the harness system 50 including the configuration and construction of the buckle housing 54, the buckle connectors 60, the actuator 62, and the various straps and belts can vary as long as it remains within the scope of the present invention as it is defined by the appended claims. A typical harness system employs woven fabric webbing to create strong yet flexible restraints for the child safety seat 10. The present invention requires that the straps be flexible, but the material from which the straps and belts are made can vary.

With reference generally to FIGS. 1 and 2, the headrest assembly 32 in this example is height adjustable on the child safety seat 10. FIG. 1 shows the headrest assembly 32 in a raised, upper most, or maximum height position and FIG. 2 shows the headrest assembly in a lowered, lower most, or minimum height position. The headrest assembly 32 can be moved vertically, i.e., raised or lowered, between the maximum and minimum height positions as selected by the caregiver or user. In one example, the headrest assembly 32 can be secured at or near each of the raised or lowered positions on the child car seat 10 as described below. In this example, the headrest assembly 32 can also be selectively secured at one or more intermediate height positions located between the maximum and minimum positions, also as described below. The height of the headrest assembly 32, including the head support section 34 and side wings 36, can be raised or lowered relative to the upper end 28 of the seat back and relative to the top side 20 of the seat bottom 14. The height adjustability is provided in order to accommodate children of different height. A shorter child can be placed in the seat and the headrest assembly 32 can be positioned at or near the lowered position depicted in FIG. 2. A taller child can be placed in the seat and the headrest assembly 32 can be positioned at or near the raised position shown in FIG. 1. The shoulder strap height is adjusted as the headrest height is adjusted.

An adjustment mechanism or a means is disclosed herein by which the height of the headrest assembly 32 and the shoulder straps 58 is adjusted. The disclosed adjustment mechanism has a number of components as shown in FIGS. 3-5. The harness system 50 performs the actuator function for or actuates the adjustment mechanism. As shown in FIG. 3, a headrest part 70 of the adjustment mechanism is carried by the headrest assembly 32 and a back part 72 of the adjustment mechanism is located on the seat back 16 near the upper end 28. The one example of components forming the adjustment mechanism in accordance with the teachings of the present invention is described herein for illustrative purposes. Details of the components for the adjustment mechanism can vary as long as it remains within the scope of the present invention as it is defined by the appended claims.

As shown in FIGS. 3 and 5, the headrest part 70 of the adjustment mechanism generally has a carriage 74 mounted to a back surface of 76 of the headrest assembly 32. The carriage 74 is located at about the transverse center of the headrest assembly 32. The carriage 74 has a vertically elongated body 78 riveted or otherwise fastened by fasteners 80 to the headrest assembly 32. A gap 82 is created between the back surface 76 and the carriage 74. A vertical slot or track 84 is provided in and located at about the center of the seat back 16 (see FIGS. 1, 3, and 4). The fasteners 80 are received through the vertical slot or track 84 and the seat back 16 is sandwiched or captured between the carriage 74 and the back surface 76 within the gap 82. The headrest assembly 32 and the carriage 74 can move vertically over a distance defined by the length of the slot or track 84.

In this example, a lower end of the carriage 74 includes a pair of standoffs or brackets 86. The brackets 86 are laterally spaced apart from one another and extend rearward from the carriage body 78. A slot 88 is formed through each of the brackets or standoffs 86. Each slot 88 is oriented horizontally. A rod or bar 90 extends transversely through each of the slots 88 and is lengthy enough so that a substantial portion of the bar 90 extends well beyond each side of the carriage 74. The bar 90 forms a strap router that guides and directs the shoulder straps 58 as described below. Each end portion of the bar 90 terminates at a distal end 92. A biasing element, such as a clock spring 94 in this example, has a coil end 96 that wraps around and is affixed or coupled to each distal end 92 of the bar 90. Each clock spring 94 also has a tab end 98 that is affixed to the seat back 16 in this example. The clock springs 94 are configured in this example to bias the rod 90, and thus the carriage 74 and headrest assembly 32, upward to the raised or maximum height position depicted in FIGS. 1 and 3. The headrest assembly 32 can be moved downward by overcoming the bias force of the clock springs 94 or other biasing elements, but will return to the maximum height position unless retained against the spring bias force as described below.

As will become evident to those having ordinary skill in the art, features of the headrest part 70 and the connection between the headrest assembly 32 and the seat back 16 permitting vertical headrest movement can vary as long as it remains within the scope of the present invention as it is defined by the appended claims. In the disclosed example, the headrest assembly 32 and the seat back 16 are joined along a single connection axis or point defined by the track 84. In an alternate example, two or more connection points or locations, each permitting vertical relative motion between the headrest assembly and seat back could be utilized. In addition, other connection mechanisms and arrangements can also be used and yet permit such vertical relative movement. The carriage 74 can alternatively be formed integrally with, or at least partly integral with the headrest 32. Also, each of the seat shell 12 and the headrest assembly 32 can employ steel reinforcement or other strength enhancing materials, constructions, and configurations, if desired. Further, the seat can include a reinforcing framework also formed of steel, molded in ribs, or other suitable means. Such strength enhancements can be employed in order to ensure that the child safety seat 10 can withstand loads applied during use, some of which may be applied by the harness system 50 during adjustment as discussed in greater detail below. The rod or bar 90 can be formed of steel, aluminum, plastic, or composite materials as well.

As depicted in FIG. 5, the bar 90 is biased rearward to the rear ends of the slots 88. A bar cradle 100 is positioned between the brackets 86 and has a curved, rear facing surface that cradles the bar 90. The bar cradle 100 is biased by a coil spring 102, pushing the bar 90 to the rearward ends of the slots 88. Again, the bar 90 can be biased in the rearward direction as shown, but utilizing an alternative biasing element and/or structure that is different from the disclosed brackets 86, slots 88, coil spring 102, and bar cradle 100, if desired.

As shown in FIGS. 1 and 3, the back part 72 of the adjustment mechanism generally has a pair of notch racks 110 mounted to the seat back 16 and secured thereto by fasteners 108. Each of the notch racks 110 is generally vertically oriented and includes an array of vertically spaced apart notches, detents, or bar seats 112 along a rearward face of the rack. Each of the notch racks 110 is laterally spaced from the other on the seat back 16 and is positioned to align with the bar 90 near, but inwardly spaced from, its distal ends 92. In this example, a pair of strap slots 114 is formed through the seat back 16. Each of the strap slots 114 is vertically oriented, has a width sufficient to permit passage of one of the shoulder straps 58 through the seat back 16, and has a vertical length sufficient to permit travel of the shoulder straps 58 upward or downward as described below. In this example, each strap slot 114 is positioned laterally inward of a respective one of the notch racks 110 and outboard on a corresponding side of the headrest carriage 74. In the disclosed example, the array of bar seats or notches 112 has a wave or saw-toothed shape oriented so that the bar 90 must move rearward and downward to seat therein.

As will become evident to those having ordinary skill in the art, the back part 72 can also vary as long as it remains within the scope of the present invention as it is defined by the appended claims. Further, arrangement of the various components and features of the back part 72 can also vary from the example shown and described herein. The relative positioning between the strap slots 114, the notch racks 110, and the like can be altered. Further, the notch racks 110 can be integrally formed on the seat back 16, if desired. The shape and configuration of the bar seats or notches 112 can also vary from the example shown. The notch racks 110 can be formed of any suitable material, such as steel, aluminum, plastic, composite materials, or the like. Further, only one notch rack can be utilized and yet the invention could function as intended. In such an embodiment, the notch rack could be centrally positioned on the seat back 16 and a pair of the carriages or other slide mechanisms could be positioned outboard of the single notch rack, if desired.

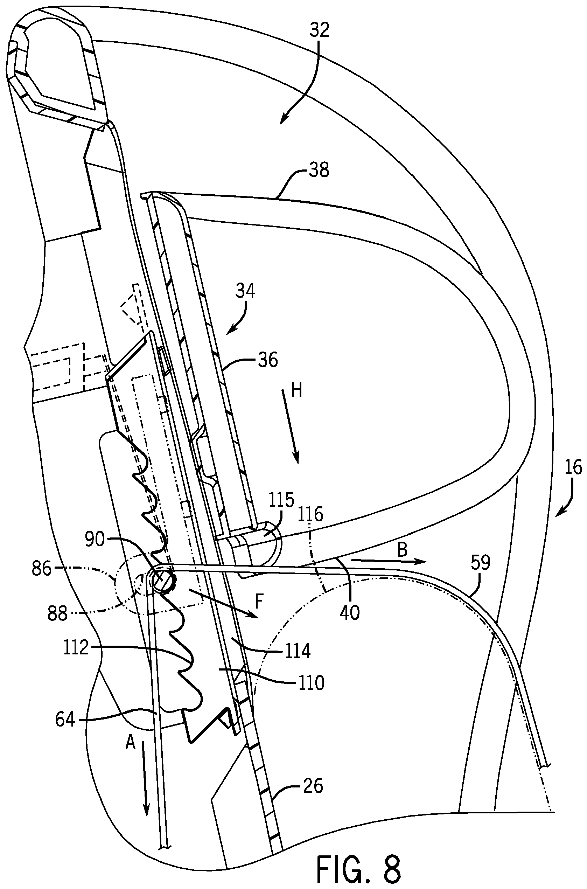

In another example, the brackets 86 and slots 88 could be eliminated and replaced by vertical guide slots formed over the bar seats 112. A spring biasing device could be provided on each of the modified racks. The bar 90 could be captured within the guide slots but able to move into and out of engagement with the detents or seats. As shown in FIGS. 1, 3, and 6, a strap guide, notch, or cutout 115 can be provided on the bottom 40 of the headrest assembly 32 and aligned with each of the strap portions 59 of the shoulder straps 58. The strap guides 115 can assist in keeping the shoulder straps 58 in position on a child's shoulders. When a child is secured by the harness system 50 in the child safety seat 10, the shoulder straps can seat in the guides 115 (see FIG. 8). The seat soft goods (not shown) can also include slots that align with the strap slots 114 in the seat back, allowing the shoulder straps to pass through the soft goods on the seat. Various accessories and/or designs can be employed to keep a majority of the soft goods slots covered.

During manufacture of the disclosed child safety seat 10, assembly of the product can be rendered easier. The shoulder strap routing would not require one to fish or thread the webbing of the straps 58 through closed or small apertures. Instead, the shoulder straps 58 are simply routed through the large strap slots 114 of the seat back.

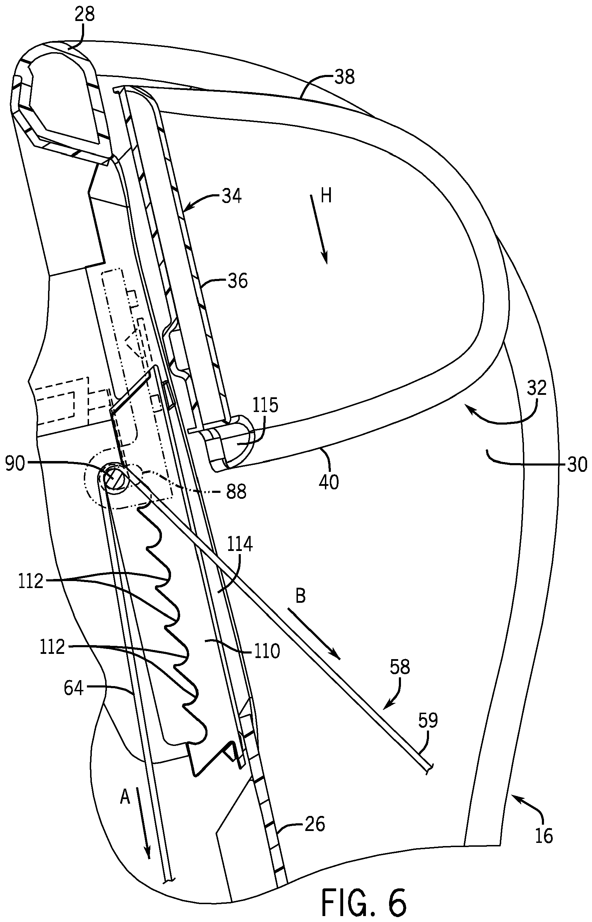

With reference to FIGS. 1, 3, and 4, the shoulder straps 58 are routed from the back side 63 of the seat back 16 over the bar 90, through the strap slots 114, and to the front facing side 26. The strap router or bar 90 separates the shoulder straps 58 into the back portions 64 extending down from the bar along the back side 63 and the strap portions 59 extending forward and downward over the front facing side 26. With the buckle connectors 60 detached from the buckle housing 54, a user can tug on the buckle connectors to lengthen the shoulder straps 58, increasing the length of the strap portions 59 as is known in the art. When the buckle connectors 60 are latched to the buckle housing 54, a user can tug on the free end portion 68 of the tensioning strap 66. This will begin to shorten the harness system 50 by applying tension through the strap 66 to the splitter plate 65 on the back side 63. Such tension pulls down on the splitter plate 65 and the back portions 64 of the shoulder straps 58. This will in turn straighten the strap portions 59 as shown in FIG. 6.

With reference to FIG. 6, with no obstruction positioned on the seating surface of the child safety seat 10, the strap portions 59 of the shoulder straps 58 are generally taut. In this configuration, the strap portions 59 are also directed from the bar 90 at a generally steep downward angle, extending slightly forward toward the crotch stalk 52. Under tension, the back portions 64 will pull down on the bar 90 in the direction of the arrow A, creating a force vector. The strap portions 59 will pull down and slightly forward on the bar in the direction of the arrow B, creating another force vector. The combined force created by the vectors A and B and applied to the bar 90 in this condition is substantially downward.

To adjust the height of the headrest assembly 32 relative to the seat back 16 and the height of the shoulder straps 58 on the seat back, a user can continue to tug on the free end portion 68 of the tensioning strap 66. With reference to FIG. 6, this will apply further tension to the back portions 64 in the direction of the arrow A and to the strap portions 59 in the direction of the arrow B. The added tension will begin to pull the headrest assembly 32 and shoulder straps 58 downward in the direction of the arrow H when sufficient load is applied to the bar 90 to overcome the bias force of the clock springs 94. The biasing force of the coil spring 102 in this condition is sufficient to counter any forward force on the bar 90 created by the strap portions 59 in the direction of the arrow B. The spring 102 will thus keep the strap router or bar 90 disengaged from the notch racks 110, allowing the headrest assembly 32 and bar 90 to travel downward along the track 84 in the seat back 16.

If the strap portions 59 encounter no obstruction on the seating surface of the child safety seat 10, the headrest assembly 32 can be adjusted downward to the lowered or minimum height position depicted in FIG. 2. If a child is seated in the child safety seat 10, the child's shoulders are intended to create an obstruction that the strap portions 59 will eventually contact, if the child is tall enough. If the child is not tall enough, the headrest assembly 32 and the shoulder straps 58 can be height adjusted to the minimum height position.

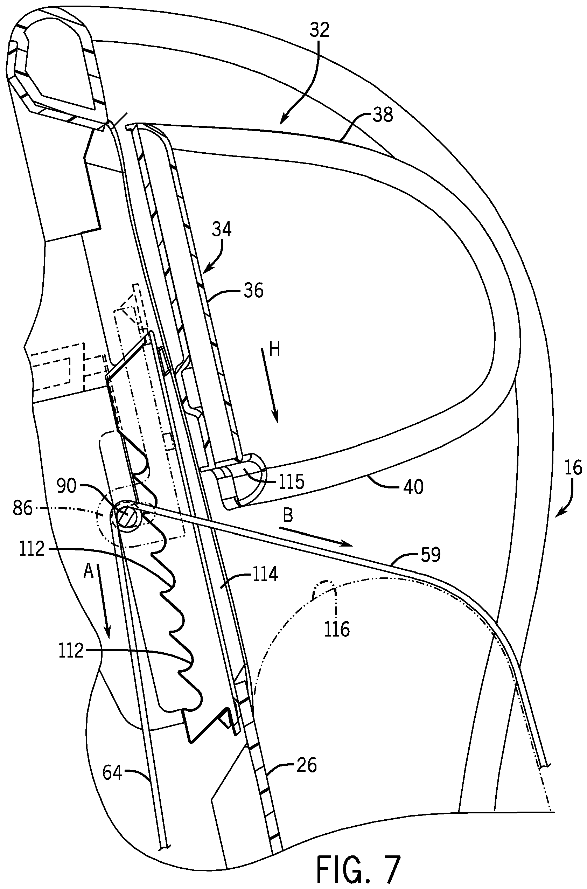

In FIG. 7, a child's shoulders 116 are depicted in phantom. The shoulders 116 create an obstruction to continued, unimpeded, downward movement of the strap portions 59. As the strap portions 59 encounter the shoulders 116, the angle of the strap portions from the bar 90 forward and relative to the back portions 64 increases and becomes more horizontal or less vertically steep. This angle change also changes the direction of the force applied to the bar 90 by the shoulder straps 58 in the direction of the arrow B. The force direction change for the vector arrow B will in turn change the resultant force applied to the bar 90 by increasing the forward horizontal force component. The headrest assembly 32 and shoulder straps 58 continue to move downward in the direction of the arrow H. However, the force applied by the strap portions 59 to the bar 90 begins to overcome the force of the coil spring 102 and moves the bar 90 forward along the slots 88 toward the seat back 16 and the notch racks 110.

With reference to FIG. 8, as the angle of the strap portions 59 becomes more horizontal, the forward force vector continues to increase. The resultant forward tension applied to the harness system 50 ultimately will force the bar 90 into one of the bar seats 112 in each of the notch racks 110. When the bar 90 seats in one of the notches 112, downward movement of the headrest assembly 32 and shoulder straps 58 stops. The headrest height and the shoulder strap height relative to the seated child are thus properly adjusted and positioned and the height of the bar 90 determines both.

The central adjuster 67 can be configured, as is known in the art, to retain the adjusted strap lengths and belt tension in the harness system 50 once the system is latched or buckled. Thus, the adjusted height of the headrest assembly 32 and the shoulder straps 58 will be retained at the appropriate level while the child is seated in the child safety seat 10 and secured by the latched or buckled harness system 50. The central adjuster 67 can also be configured, as is known in the art, to release the tensioning strap 66 when disengaged. Upon release of the central adjuster 67, the headrest assembly 32, the bar 90, and thus the shoulder straps 58 can be returned by the clock springs 94 to the maximum height position.

Disengagement of the central adjuster 67 can occur upon release of the buckle connectors 60 from the buckle housing 54. Alternately, disengagement of the central adjuster 67 can occur upon actuation of the release actuator 69. The function and operation of the central adjuster 67 can vary as long as it remains within the scope of the present invention as it is defined by the appended claims. However, it is desired that the central adjuster 67 retain the adjusted length of the harness system 50, i.e., retain its grip on the tensioning strap 66 when a child is secured in the child safety seat 10 and the harness system is latched or buckled. A separate or additional mechanism can alternatively or optionally be employed to hold the headrest assembly and/or the shoulder straps at the adjusted height when the child is secured instead of only being retained by the central adjuster 67 and straps 66 and 58.

For example, when the headrest assembly 32 reaches the proper height according to the size of the child, and the amount of tension in the harness system 50 approaches the desired harness tension, a separate device can be actuated that will lock the headrest assembly from moving any further in the downward direction. An indicator may also be in place to give feedback to the parent to ensure them that the system is locked and properly tensioned. The sum of the forces required to move the headrest assembly downward and lock the headrest assembly in place at the correct height can be less than or equal to the sum of the forces required to achieve the desired harness tension. Thus, a user can further tension the harness system 50, if needed, without further adjusting the height of the headrest assembly 32 or shoulder straps 58. An optional force or tension indicator, either visual or audible, can be in place to notify the user that the headrest assembly is locked and/or the proper harness tension is achieved. When the buckle connectors 60 are released, the system can be configured to unlock and the headrest assembly can return to the maximum height position. The parent must then repeat the process the next time their child is seated in the seat to ensure that their child is properly secured each and every time. In any embodiment disclosed herein, the various spring forces and the geometry of the components and harness system can be designed to achieve a predetermined harness tension at a given shoulder strap height and headrest height for a given seat design.

In another alternate example, the restraint system or harness system 50 can include a locking retractor and/or an automatic belt tensioner to be used in place of the central adjuster 67. In such an embodiment, the retractor can have a mechanism connected to the buckle housing 54 that, when unbuckled, would allow the user to pull the harness to create slack in the harness. This would allow the user to easily remove or place the child in the seat and correctly position the harness straps. When buckled, the mechanism can be constructed to automatically switch the retractor or tensioner to locking mode. This can then cause the harness system to tighten and pull the headrest assembly downward automatically and lock it in place at the correct height for the child, as described above. In such an alternate example, the automatic retractor or tensioner would replace the manual tensioning employed by the parent pulling on the free end portion 68 at the central adjuster 67 as described above.

In another example, the retractor mechanism described above can optionally be operated by a timed actuation mechanism whereby the retractor will switch to the locking (retract or tension) mode after a predetermined duration following when the buckle is secured. Another option may include a secondary device connected to the retractor, such as a button or switch to be activated by the user, which can be manipulated to switch the retractor to the locking (retract or tension) mode or the release mode.

Although shown and described herein in connection with a child safety seat 10 in the form of a car seat, the disclosed harness system and headrest height adjustment solution may be applied to a variety of child seating devices or juvenile products on which belts, straps or other webbing arrangements are utilized. Such seats can be considered child safety seats within the context of the present invention if such seats employ an integrated, adjustable harness and headrest as described herein. In each case, the harness system may be used or employed at a given height and then conveniently adjusted along with the height of the headrest by applying tension to the harness. While shown being employed on a forward facing, reclining toddler seat, the disclosed systems and methods may be equally applicable for all child restraint systems, car seats, carriers, and the like.

Though not shown herein, a number of alternative examples of adjustment mechanisms are describe below. In one example, the headrest assembly can again include the strap router or bar and be spring biased so that it tends to move upward with respect to the seat pan. However, the headrest assembly can be slidable along one or more vertical posts and a spring can be seated over each post to bias the headrest assembly upward. The adjustment mechanism can include a semi-rigid or rigid buckle stalk that is connected via a cable to a spring-biased latch finger or pawl in contact with an array of teeth on the headrest assembly. The teeth can engage the latch finger or dog to secure the headrest at a given adjusted height. The cable can become loose when the buckle stalk is rotated toward the seat back and fastened by the buckle tongues or connectors as during installation to secure a child in the seat. This can allow the spring-biased latch finger to engage the teeth on the headrest assembly. The latch finger and teeth can allow the headrest assembly to move downward even when engaged, but prevent the headrest assembly from moving upward unless released. The buckle stalk can be spring-biased, such as with a torsion spring, so that it rotates forward when not restrained or connected to the harness, i.e., when the buckle connectors are released. When the buckle stalk is in the forward or down position, the stalk can pull the cable to release the latch finger, disengaging it from the teeth on the headrest assembly. The springs on the posts can then move the headrest assembly and shoulder straps upward to the maximum height position.

In another example, as the parent pulls the free end portion of the tensioning strap at the central adjuster and the headrest assembly and shoulder straps move downward, an alternate position dependent mechanism can be in place to lock the headrest assembly at the proper height for the child. This mechanism can include semi-rigid paddles contained within harness covers on the shoulder straps. The paddles can be coupled to the headrest assembly and strap router or bar. When the shoulder straps contact the child's shoulders, the paddles can also contact the child's shoulders or at least pivot as the straps become more horizontal while the headrest assembly and harness moves down. The paddles can rotate upward about an axis fixed with respect to the headrest assembly, such as an axis of the strap router or bar. The paddles can also be coupled to a portion of the locking mechanism, such as latch fingers or tabs. As the paddles rotate upward, the tabs or latch fingers can engage one of a series or array of teeth or openings integrated into or coupled to the seat shell. Once engaged, the downward movement of the headrest assembly and shoulder straps can be stopped. The headrest assembly and harness height will now be fixed at this point until the buckle is released. When released, the headrest assembly can move upward, returning the paddles and latch fingers to a downward, disengaged orientation.

In another example, the adjustment mechanism can again include a semi-rigid or rigid buckle stalk coupled to a buckle body. In this example, the buckle stalk can be spring biased so that when proper tension is achieved, the buckle body will overcome an internal spring force, lengthen, and pull on a cable. As the buckle stalk body lengthens, it can pull a cable connected to the latch finger, similar to the earlier example. The latch finger in this example can be spring biased so that, when the harness is not buckled, it will tend to disengage from the tooth or opening in the headrest assembly and allow the headrest assembly to move either up or down. When the buckle body is latched and tensioned by the harness system and pulls the cable, the latch finger can engage the headrest assembly and stop the headrest assembly from moving in either direction.

In another example more similar to the example shown and described herein, the headrest assembly can employ a mechanism that has a spring-biased lock with a latching mechanism that is instead coupled to the shell. The lock with a spring loaded latch can be connected to the buckle stalk by a cable as described above. A strap router can be provided on the headrest to route the shoulder straps through the seat back. A second bar can be employed to route the harness straps, but can be coupled to the shell. The bar can be contained in slots allowing a fixed linear displacement of the bar. The bar may be spring-biased toward one end of the slots and in the direction opposite that of a plurality of detents in the headrest assembly. The lock can be designed such that the latch prevents movement of the bar when locked or allows the bar to slide, against its spring bias, past the latch (when released by the cable. With the latch released, the bar can slide into one of the plurality of detents in the headrest assembly. As the headrest assembly and detents move downward, and when the desired harness tension is approached, the bar, which is acted on by the harness, will overcome its spring forces and slide past the released latch into one of the detents in the headrest assembly. With the harness system engaged or secured, the cable can be loose and the latch locked. The lock will retain the bar in one of the detents, which determines the height of the headrest assembly and shoulder straps. When the system is released, i.e., when the buckle connectors are released, the buckle stalk can rotate forward under spring force, pulling on the cable. The cable can cause the lock latch to retract from its locking position and allow the bar to return to the unlocked position under its own spring force, away from the detents on the headrest assembly. When the bar clears the detents, the headrest assembly can return to the upper-most position under spring force.

In yet another example, the headrest assembly can include a mechanism for locking the headrest assembly that includes a plurality of bars. In one example, the mechanism can employ three bars, two of which can be fixed with respect to the seat shell and a third middle bar can be coupled to the seat shell and contained in slots to allow a fixed linear displacement of the bar. The middle bar can be spring-biased in the direction opposite of a plurality of detents that are integrated into the headrest assembly, as in the previous example. The harness system can be routed between the bars in this example in such a way that the middle bar (moveable bar), when in the unlocked position, will deflect a portion of the harness out of the linear path of the harness at the point where the middle bar is located. As the headrest assembly moves downward and the desired harness tension is approached, the harness can begin to straighten. The force of the harness on the bar can overcome the spring force on the bar to allow the bar to move into one of the detents, thus locking the headrest assembly in place. When the buckle connectors are released, the relaxed tension of the harness will allow the middle bar to return to the unlocked position under spring force and the headrest assembly will return to the upper-most position.

In still another example, the headrest assembly can include an adjustment mechanism with a spool, or two such spools, that are coupled to the seat shell on a fixed axis with respect to the seat shell. The spool or spools can be mounted to a bar coupled to the seat shell for example. The mechanism can include a second bar that is contained in slots of the seat shell or headrest assembly. The slots can allow a fixed linear displacement of the second bar, which can again be spring-biased in the direction opposite of a plurality of detents integrated into the headrest assembly, as described in previous examples. The harness straps can be routed through the spool via a slot or opening in the spool. The spool can have an integrated cam and can be spring biased, such as by a torsion spring. Under a normal spring tension, i.e., when the harness system is loose, the cam can be positioned away from the bar, and the harness can be deflected out of its linear path. The spring force can be such that, as the headrest assembly moves downward and the desired harness tension is approached, the belt straightening can cause the spool to begin to rotate in a direction that causes the cam to contact the bar. The increased force of the belt tensioning (straightening) can be such to overcome the combined forces of the torsion spring (spool) and the compression spring (bar), and the cam can force the bar to move into one of the detents in the headrest assembly, locking the headrest assembly in place. When the buckle is released, the relaxed tension of the harness can allow the torsion spring to rotate the spool to its original position, in turn allowing the bar to return to the unlocked position. When the bar clears the detents, the headrest assembly will be free to return to the upper-most position under spring force.

In another variation of the immediately preceding example, the spool may contain an integrated (or attached) protrusion or latch finger. When the spool is rotated, the protrusion or latch finger can move or rotate into one of the detents to lock the headrest assembly in place. The spool may also contain a notched profile that accepts a spring biased lock. The lock can be attached to the buckle stalk via a cable as described in the earlier examples. The lock can prevent the spool from rotating in either direction until the system and thus the cable are released.

The disclosed examples can make it easier for a parent to correctly secure their child in the car seat each and every time they perform the task. The height of the headrest assembly and shoulder harness should be at a certain position based on the size of the child. The disclosed harness height adjustment system examples can help parents who may not know what the ideal harness and headrest height should be. The systems do so by automatically locking the headrest assembly and shoulder harness in position when the system reaches the correct height for the child. The headrest motion and shoulder strap motion are tied to one another. Existing, known solutions require that the consumer manually adjust the height of the headrest assembly and shoulder harness positions. Manual adjustment can lead to potential incorrect adjustment if the parent adjusts the height of either component to a less than ideal position.

These disclosed systems can make it easier for a parent to correctly and repeatedly secure their child in the car seat each and every time. The height of the shoulder straps of the harness system and the headrest of the seat would be at a correct height based on the child's size. The disclosed examples can aid parents that might not otherwise know the ideal harness height or headrest height for securing their child in a car seat.

Although certain harness system and headrest height adjustment components, mechanisms, and methods have been described herein in accordance with the teachings of the present disclosure, the scope of coverage of this disclosure is defined according to the scope of the appended claims.

## Claims

1. A child safety seat (10) comprising:
a seat back (16) having an upper end, a back side, and a front facing side;
a seat harness (50) with a pair of shoulder straps (58) each having a strap portion (59) extending forward and downward along the front facing side, the height of the strap portions on the seat back being vertically adjustable;
a headrest assembly (32) coupled to the seat back (16) near the upper end, the vertical position of the headrest assembly being adjustable relative to the seat back between a raised position and a lowered position;
a transverse bar (90) coupled to and movable with the headrest assembly and located adjacent the back side of the seat back; and a spring (94) coupled to the transverse bar biasing the headrest assembly to the raised position,
wherein the height of the strap portions (59) and the vertical position of the headrest assembly (32) can be adjusted from the raised position downward by increasing tension of the shoulder straps (58).

2. A child safety seat according to claim 1, wherein the transverse bar (90) is located behind the back side of the seat back (16) near the bottom of the headrest assembly (32).

3. A child safety seat according to claim 1, wherein the transverse bar (90) directs the pair of shoulder straps (58) from the back side toward the front facing side of the seat back (16).

4. A child safety seat according to claim 1, wherein the transverse bar (90) is captured within an elongate slot (88) permitting the bar to move toward and away from the back side of the seat back, and optionally,
wherein a spring (102) biases the bar (90) away from the back side and from a vertical array of bar seats (112) carried on the back side, and optionally,
wherein the bar (90) can seat in one of the vertical array of bar seats (112) when tension in the seat harness (50) overcomes a force of the spring (102).

5. A child safety seat according to claim 1, further comprising:
an array of bar seats (112) extending vertically and carried on the back side of the seat back, wherein the
transverse bar (90) is captured within an elongate slot (88) permitting the bar to move horizontally into and out of engagement with the array of bar seats, the bar being moved horizontally by tension in the pair of shoulder straps (58).

6. A child safety seat according to claim 1, further comprising a vertical slot (84) in the seat back (16), the headrest assembly (32) slidable along the vertical slot between the raised and lowered positions, and optionally,
wherein the transverse bar (90) is connected to a carriage (74) on the headrest assembly and movable vertically therewith, the transverse bar movable by tension applied by the pair of shoulder straps (58) into engagement with any one of a plurality of vertically arranged bar seats (112) on the back side of the seat back (16).

7. A child safety seat according to claim 6
wherein the transverse bar (90) is biased out of engagement with the plurality of vertically arranged bar seats (112) by a spring on the carriage.

8. A child safety seat according to claim 1, wherein
the transverse bar (90) moves to an engaged condition, after the strap portions encounter shoulders of a seat occupant to thereby inhibit further downward movement of the headrest assembly.

9. A child safety seat according to claim 1, wherein the transverse bar (90) has a pair of distal ends and said spring is a clock spring (94) coupled to each of the distal ends (92) and to the back side of the seat back.

10. A child safety seat according to claim 8, further comprising:
a plurality of bar seats (112) arranged vertically along a portion of the child safety seat, wherein tension applied to back portions of the shoulder straps (58) pulls the transverse bar (90) and headrest assembly down from the raised position, and optionally,
wherein the orientation of the strap portions changes to pull the transverse bar (90) forward into engagement with one of the plurality of bar seats (112) when the strap portions contact shoulders of an occupant seated in the child safety seat.

11. A child safety seat according to claim 1, wherein the seat back has a pair of strap slots (114) vertically oriented and formed through the seat back, each of the shoulder straps extending through a respective one of the pair of strap slots (114).

12. A child safety seat according to claim 1, wherein the seat harness (50) has a tensioning strap (66) protruding from a front of a seat bottom (14), the tensioning strap coupled to back portions of the shoulder straps, and wherein the seat harness has a buckle housing (54) coupled to the seat bottom (14), the strap portions connectable to the buckle housing (54), wherein the tensioning strap can be pulled to increase tension in the shoulder straps when the strap (66) portions are connected to the buckle housing, and optionally,
wherein the tensioning strap is coupled to an automatic tensioner that is actuated to increase the tension when the strap portions are connected to the buckle housing (54).

13. A child safety seat according to claim 1, wherein the headrest assembly (32) is adjustable to one or more intermediate positions between the raised and lowered positions.

14. A child safety seat according to claim 1, wherein
by selectively increasing or decreasing tension in the pair of shoulder straps, the vertical position of the headrest assembly can be adjusted downward or upward, respectively, between the raised position and the lowered position.

## Patentansprüche

1. Kindersicherheitssitz (10), umfassend:
eine Sitzrückenlehne (16) mit einem oberen Ende, einer Rückseite und einer nach vorn gewandten Seite;
ein Sitzgurtsystem (50) mit einem Paar Schulterriemen (58), die jeder einen Riemenabschnitt (59) aufweisen, der sich entlang der nach vorn gewandten Seite nach vorn und nach hinten erstrecken, wobei die Höhe der Riemenabschnitte an der Sitzrückenlehne vertikal verstellbar ist;
eine mit der Sitzrückenlehne (16) nahe dem oberen Ende gekoppelte Kopfstützenanordnung (32), wobei die vertikale Position der Kopfstützenanordnung bezüglich der Sitzrückenlehne zwischen einer angehobenen Position und einer abgesenkten Position verstellbar ist;
eine Querstrebe (90), der mit der Kopfstützenanordnung gekoppelt und und mit dieser bewegbar ist und benachbart zur Rückseite der Sitzrückenlehne angeordnet ist; und
eine Feder (94), die mit der Querstrebe gekoppelt ist und die Kopfstützenanordnung zur angehobenen Position vorspannt,
wobei die Höhe der Riemenabschnitte (59) und die vertikale Position der Kopfstützenanordnung (32) durch Erhöhen von Spannung der Schulterriemen (58) aus der angehobenen Position nach unten verstellbar sind.

2. Kindersicherheitssitz nach Anspruch 1, wobei die Querstrebe (90) hinter der Rückseite der Sitzrückenlehne (16) nahe dem Unterteil der Kopfstützenanordnung (32) angeordnet ist.

3. Kindersicherheitssitz nach Anspruch 1, wobei die Querstrebe (90) das Paar Schulterriemen (58) von der Rückseite zu der nach vorn gewandten Seite der Sitzrückenlehne (16) führt.

4. Kindersicherheitssitz nach Anspruch 1, wobei die Querstrebe (90) in einem länglichen Schlitz (88) aufgenommen ist, der es ermöglicht, dass sich die Strebe zur Rückseite der Sitzrückenlehne hin und von dieser weg bewegt, und
wobei optional eine Feder (102) die Strebe (90) von der Rückseite und von einer vertikalen Reihe von Strebenaufnahmen (112), die an der Rückseite gehalten wird, weg vorspannt und
wobei optional die Strebe (90) in einer aus der vertikalen Reihe von Strebenaufnahmen (112) sitzen kann, wenn Spannung im Sitzgurtsystem (50) eine Kraft der Feder (102) übersteigt.

5. Kindersicherheitssitz nach Anspruch 1, ferner umfassend:
eine Reihe von Strebenaufnahmen (112), die sich vertikal erstreckt und an der Rückseite der Sitzrückenlehne gehalten wird,
wobei die Querstrebe (90) in einem länglichen Schlitz (88) aufgenommen ist, der es ermöglicht, dass sich die Strebe in und außer Eingriff mit der Reihe von Strebenaufnahmen bewegt, wobei die Strebe durch Spannung in dem Paar Schulterriemen (58) horizontal bewegt wird.

6. Kindersicherheitssitz nach Anspruch 1, ferner umfassend einen vertikalen Schlitz (84) in der Sitzrückenlehne (16), wobei die Kopfstützenanordnung (32) entlang des vertikalen Schlitzes zwischen der angehobenen und der abgesenkten Position verschiebbar ist, und
wobei optional die Querstrebe (90) mit einer Halterung (74) an der Kopfstützenanordnung verbunden und vertikal mit selbiger bewegbar ist, wobei die Querstrebe durch Spannung, die durch das Paar Schulterriemen (58) angewandt wird, in Eingriff mit einer jeglichen aus einer Mehrzahl vertikal angeordneter Strebenaufnahmen (112) an der Rückseite der Sitzrückenlehne (16) bewegbar ist.

7. Kindersicherheitssitz nach Anspruch 6, wobei die Querstrebe (90) durch eine Feder an der Halterung außer Eingriff mit der Mehrzahl vertikal angeordneter Strebenaufnahmen (112) vorgespannt ist.

8. Kindersicherheitssitz nach Anspruch 1, wobei sich die Querstrebe (90) in einen Eingriffszustand bewegt, nachdem die Riemenabschnitte auf Schultern eines Insassen getroffen sind, um dadurch eine weitere Abwärtsbewegung der Kopfstützenanordnung zu vermindern.

9. Kindersicherheitssitz nach Anspruch 1, wobei die Querstrebe (90) ein Paar distaler Enden aufweist und die Feder eine Uhrenfeder ist (94), die mit jedem der distalen Enden (92) und mit der Rückseite der Sitzrückenlehne gekoppelt ist.

10. Kindersicherheitssitz nach Anspruch 8, ferner umfassend:
eine Mehrzahl von Strebenaufnahmen (112), die vertikal entlang eines Abschnitts des Kindersicherheitssitzes angeordnet sind, wobei auf Rückabschnitte der Schulterriemen (58) angewandte Spannung die Querstrebe (90) und die Kopfstützenanordnung aus der angehobenen Position nach unten zieht, und
wobei sich optional die Ausrichtung der Riemenabschnitte verändert, um die Querstrebe (90) nach vom in Eingriff mit einer der Mehrzahl von Strebenaufnahmen (112) zu ziehen, wenn die Riemenabschnitte mit Schultern eines im Kindersicherheitssitz sitzenden Insassen in Kontakt kommen.

11. Kindersicherheitssitz nach Anspruch 1, wobei die Sitzrückenlehne ein Paar Riemenschlitze (114) aufweist, die vertikal ausgerichtet und durch die Sitzrückenlehne ausgebildet sind, wobei sich jeder der Schulterriemen durch einen jeweiligen Riemenschlitz des Paars an Riemenschlitzen (114) erstreckt.

12. Kindersicherheitssitz nach Anspruch 1, wobei das Sitzgurtsystem (50) einen Spannriemen (66) aufweist, der aus einer Vorderseite eines Sitzunterteils (14) ragt, wobei der Spannriemen mit Rückabschnitten der Schulterriemen gekoppelt ist und wobei das Sitzgurtsystem ein mit der Sitzunterseite (14) gekoppeltes Verschlussgehäuse (54) aufweist, wobei die Riemenabschnitte mit dem Verschlussgehäuse (54) verbindbar sind, wobei der Spannriemen gezogen werden kann, um Spannung in den Schulterriemen zu erhöhen, wenn die Abschnitte des Riemens (66) mit dem Verschlussgehäuse verbunden sind, und
wobei optional der Spannriemen mit einer automatischen Spanneinrichtung gekoppelt ist, die betätigt wird, um die Spannung zu erhöhen, wenn die Riemenabschnitte mit dem Verschlussgehäuse (54) verbunden sind.

13. Kindersicherheitssitz nach Anspruch 1, wobei die Kopfstützenanordnung (32) in eine oder mehrere Zwischenpositionen zwischen der angehobenen und der abgesenkten Position verstellbar ist.

14. Kindersicherheitssitz nach Anspruch 1, wobei die vertikale Position der Kopfstützenanordnung durch selektives Erhöhen oder Verringern von Spannung in dem Paar Schulterriemen zwischen der angehobenen Position und der abgesenkten Position nach unten bzw. oben verstellbar ist.

## Revendications

1. Siège de sécurité pour enfant (10), comprenant :
un dos de siège (16) ayant une extrémité supérieure, un côté arrière et un côté avant ;
un harnais de siège (50) avec une paire de sangles d'épaules (58), chacune ayant une partie de sangle (59) s'étendant vers l'avant et vers le bas le long du côté avant, la hauteur des parties de sangles sur le dos de siège étant réglable verticalement ;
un assemblage d'appuie-tête (32) attaché au dos du siège (16) à proximité de la partie supérieure, la position verticale de l'assemblage d'appuie-tête étant réglable relativement au dos de siège entre une position relevée et une position abaissée ;
une barre transversale (90) attachée à l'assemblage d'appuie-tête et déplaçable avec celui-ci, et située de façon adjacente au côté arrière du dos de siège ; et un ressort (94) attaché à la barre transversale poussant l'assemblage d'appuie-tête vers la position relevée,
la hauteur des parties de sangles (59) et la position verticale de l'assemblage d'appuietête (32) pouvant être ajustées vers le bas à partir de la position relevée en augmentant la tension des sangles d'épaules (58).

2. Siège de sécurité pour enfant selon la revendication 1, la barre transversale (90) étant située derrière le côté arrière du dos de siège (16) à proximité du bas de l'assemblage d'appuie-tête (32).

3. Siège de sécurité pour enfant selon la revendication 1, la barre transversale (90) dirigeant la paire de sangles d'épaules (58) à partir du côté arrière vers le côté avant du dos de siège (16).

4. Siège de sécurité pour enfant selon la revendication 1, la barre transversale (90) étant capturée dans une fente allongée (88) permettant à la barre de se déplacer vers le côté arrière du dos de siège et de s'éloigner de celui-ci, et facultativement,
un ressort (102) poussant la barre (90) vers l'opposé du côté arrière et d'un ensemble vertical de logements de barre (112) supporté par le côté arrière, et facultativement,
la barre (90) pouvant être logée dans l'un des ensembles verticaux de logements de barre (112) lorsque la tension dans le harnais de siège (50) dépasse une force du ressort (102).

5. Siège de sécurité pour enfant selon la revendication 1, comprenant en outre :
un ensemble de logements de barre (112) s'étendant verticalement et supporté par le côté arrière du dos de siège, la
barre transversale (90) étant capturée dans une fente allongée (88) permettant à la barre de se déplacer horizontalement en s'engageant et en se désengageant de l'ensemble de logements de barre, la barre étant déplacée horizontalement par la tension dans la paire de sangles d'épaules (58).

6. Siège de sécurité pour enfant selon la revendication 1, comprenant en outre une fente verticale (84) dans le dos de siège (16), l'assemblage d'appuie-tête (32) pouvant coulisser le long de la fente verticale entre les positions relevée et abaissée, et facultativement,
la barre transversale (90) étant reliée à un chariot (74) sur l'assemblage d'appuie-tête et étant déplaçable verticalement avec celui-ci, la barre transversale pouvant s'engager, par une tension appliquée par la paire de sangles d'épaules (58), avec l'un quelconque d'une pluralité de logements de barre (112) disposés verticalement sur le côté arrière du dos de siège (16).

7. Siège de sécurité pour enfant selon la revendication 6
la barre transversale (90) étant poussée hors de l'engagement avec la pluralité de logements de barre disposés verticalement (112) par un ressort sur le chariot.

8. Siège de sécurité pour enfant selon la revendication 1,
la barre transversale (90) s'engageant après que les parties de sangles font contact avec les épaules d'un occupant de siège, afin d'empêcher de cette manière que le mouvement vers le bas de l'assemblage d'appuie-tête se poursuive.

9. Siège de sécurité pour enfant selon la revendication 1, la barre transversale (90) ayant une paire d'extrémités distales et ledit ressort étant un ressort à spirale (94) attaché à chacune des extrémités distales (92) et au côté arrière du dos de siège.

10. Siège de sécurité pour enfant selon la revendication 8, comprenant en outre :
une pluralité de logements de barre (112) disposés verticalement le long d'une partie du siège de sécurité pour enfant, la tension appliquée aux parties de dos des sangles d'épaules (58) tirant la barre transversale (90) et l'assemblage d'appuie-tête vers le bas à partir de la position relevée, et facultativement,
l'orientation des parties de sangles changeant pour réaliser l'engagement de la barre transversale (90) avec l'un de la pluralité des logements de barre (112) en la tirant vers l'avant, lorsque les parties de sangles font contact avec les épaules d'un occupant de siège dans le siège de sécurité pour enfant.

11. Siège de sécurité pour enfant selon la revendication 1, le dos de siège ayant une paire de fentes de sangles (114) orientées verticalement et formées à travers le dos de siège, chacune des sangles d'épaules s'étendant à travers l'une respective de la paire de fentes de sangles (114).

12. Siège de sécurité pour enfant selon la revendication 1, le harnais de siège (50) ayant une sangle de serrage (66) dépassant d'un avant d'un fond de siège (14), la sangle de serrage attachée aux parties de dos des sangles d'épaules, et le harnais de siège ayant un boîtier de boucle (54) attaché au fond de siège (14), les parties de sangles pouvant être attachées au boîtier de boucle (54), la sangle de serrage pouvant être tirée pour augmenter la tension dans les sangles d'épaules lorsque les parties de sangle (66) sont attachées au boîtier de boucle, et
facultativement, la sangle de serrage étant attachée à un tendeur automatique qui est actionné pour augmenter la tension lorsque les parties de sangles sont attachées au boîtier de boucle (54).

13. Siège de sécurité pour enfant selon la revendication 1, l'assemblage d'appuie-tête (32) étant réglable entre une et plusieurs positions intermédiaires entre les positions relevée et abaissée.

14. Siège de sécurité pour enfant selon la revendication 1,
la position verticale de l'assemblage d'appuie-tête pouvant être ajustée vers le bas ou vers le haut, respectivement, entre la position relevée et la position abaissée, en augmentant et en diminuant de façon sélective la tension dans la paire de sangles d'épaules.
